# EUROPEAN PATENT SPECIFICATION

(11) **EP 2 749 393 B1**
(45) Date of publication and mention of the grant of the patent: **08.05.2019**
(21) Application number: 13195830.8
(22) Date of filing: 05.12.2013
(51) Int. Cl.: B29C 45/82, B29C 45/76, B29C 45/56

(54) **INJECTION MOLDING MACHINE**
SPRITZGIESSMASCHINE
MACHINE DE MOULAGE À INJECTION

(30) Priority: 25.12.2012 JP 2012281563
(43) Date of publication of application: 02.07.2014
(73) Proprietor: SUMITOMO HEAVY INDUSTRIES, LTD., Tokyo 141-6025 (JP)
(72) Inventor: Yamaguchi, Hiroshi, Chiba, 263-0001 (JP)
(74) Representative: Hoffmann Eitle

(56) References cited:
- DE-A1-102006 046 591
- JP-A- H06 198 694

## Description

### BACKGROUND

### 1. Technical Field

The present invention relates to an injection molding machine.

### 2. Description of Related Art

Injection molding machines manufacture molding products by filling a cavity of a mold unit with a liquid molding material and solidifying the molding material. The mold unit includes a stationary mold and a movable mold, and the cavity is formed between the stationary mold and the movable mold when the stationary mold and the movable mold are clamped together. Techniques are known for compressing the molding material during a mold clamping process (See, e.g., Patent Document 1).
[Patent Document 1] Japanese Unexamined Patent Publication No. 11-42685

Conventional compression techniques have issues with regard to the operability of a compression core for compressing the molding material within the cavity.

Another document is JP H06198694 A referring to a mold clamping false control device. The device includes a stationary mold, a moveable mold, a mold clasp unit for a advancing and rejecting the moveable mold, a mold clasping force control means for controlling the mold clamping force generated by the mold clamping unit and an injection means for filling rather into a cavity.

### SUMMARY

It is an object of at least one embodiment of the present invention to provide an injection molding machine that substantially solves one or more problems caused by the limitations and disadvantages of the related art.

According to an embodiment of the present invention, an injection molding machine includes the features of claim 1.

According to an aspect of the present invention, an injection molding machine including a compression core with improved operability may be provided.

### BRIEF DESCRIPTION OF THE DRAWINGS

FIG. 1 illustrates an injection molding machine according to a first embodiment of the present invention when a mold closing operation is completed;
FIG. 2 illustrates the injection molding machine when a mold opening operation is completed;
FIG. 3 is an enlarged partial view of FIG. 2;
FIG. 4 illustrates a hydraulic circuit of the injection molding machine according to the first embodiment;
FIG. 5 illustrates a hydraulic circuit of an injection molding machine according to a second embodiment of the present invention; and
FIG. 6 illustrate a hydraulic circuit of an injection molding machine according to a third embodiment of the present invention.

### DETAILED DESCRIPTION

In the following, embodiments of the present invention are described with reference to the accompanying drawings. Note that identical or corresponding features shown in two or more of the drawings are given the same reference numerals and their descriptions may be omitted. Also, in the following descriptions, it is assumed that the moving direction of a compression core upon compressing a molding material within a cavity corresponds to a forward (front) direction and the moving direction of the compression core upon releasing the compression corresponds to a backward (rear) direction.

### [First Embodiment]

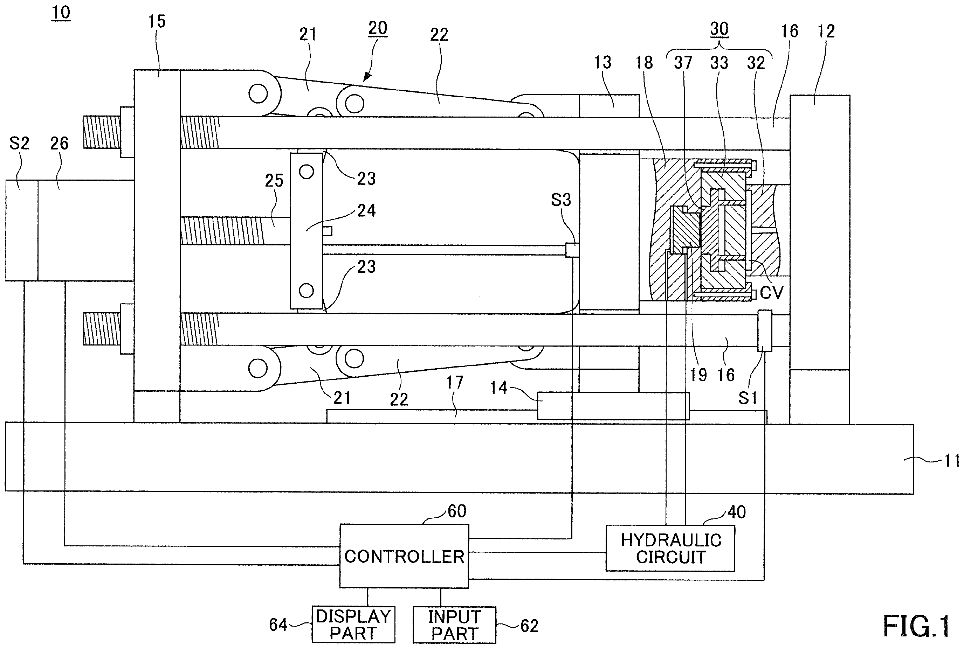

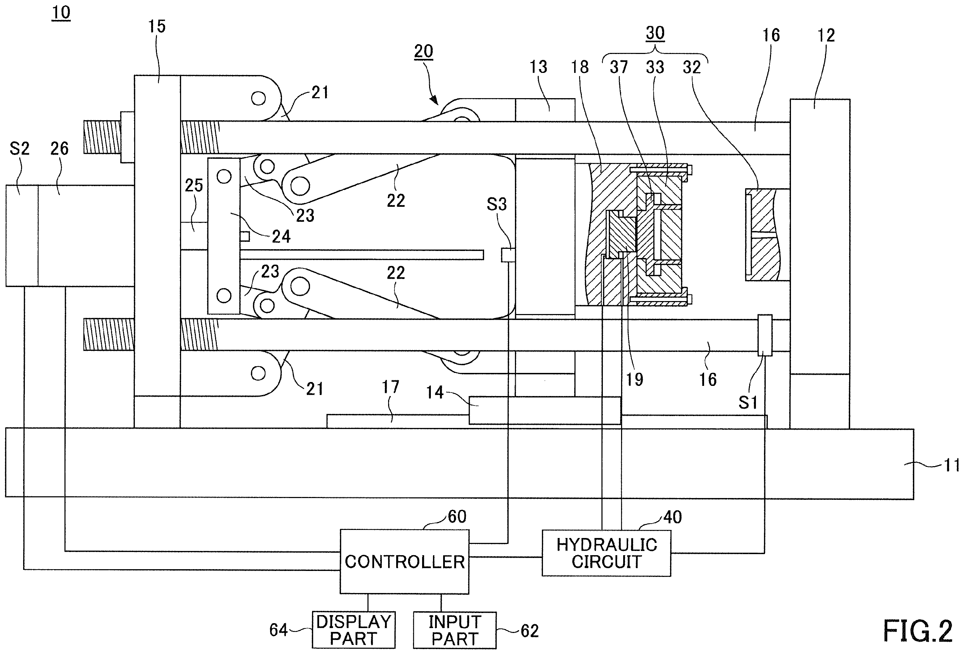

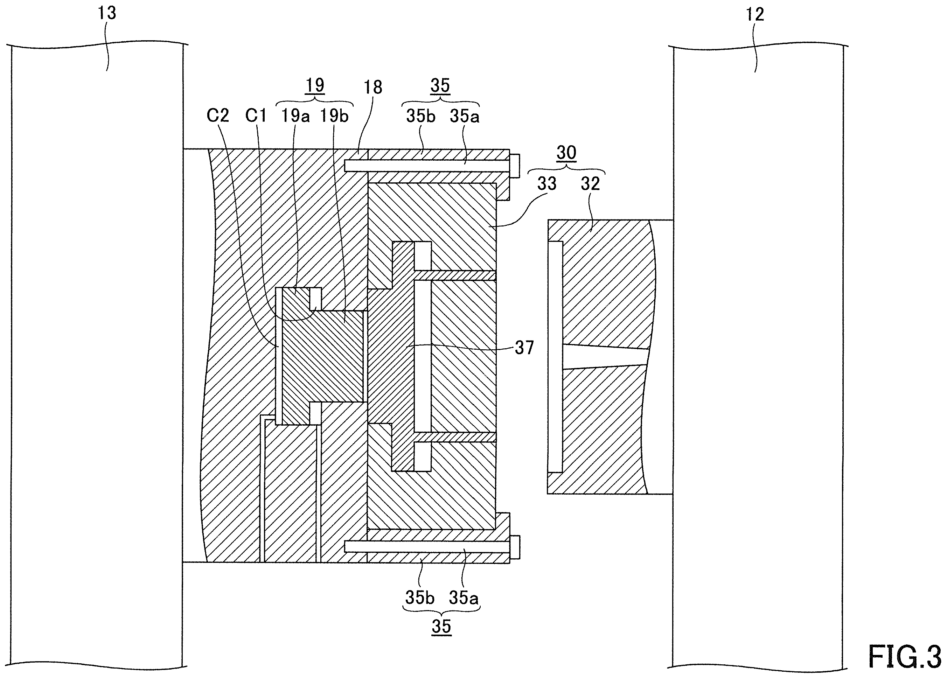

FIG. 1 illustrates an injection molding machine 10 according to a first embodiment of the present invention when a mold closing operation is completed. FIG. 2 illustrates the injection molding machine when a molding opening operation is completed. FIG. 3 is an enlarged partial view of FIG.2.

As illustrated in FIGS. 1 and 2, the injection molding machine 10 of the present embodiment includes a frame 11, a stationary platen 12, a movable platen 13, a rear platen 15, a tie-bar 16, a compression cylinder 18, a toggle mechanism 20, and a mold clamping motor 26, for example.

The stationary platen 12 may be fixed to the frame 11, for example. The rear platen 15 is arranged a certain distance away from the stationary platen 12. The rear platen 15 and the stationary platen 12 are interconnected by a number of (e.g., four) tie-bars 16. The rear platen 15 is configured to be movable back and forth with respect to the frame 11 in order to allow the tie-bars 16 to extend during a mold clamping operation.

The movable platen 13 is arranged between the stationary platen 12 and the rear platen 15. The movable platen 13 is fixed to a pair of sliders 14 that are arranged at a right side and a left side. The sliders 14 are configured to be movable back and forth along guides 17 that are arranged at the frame 11. In this way, the movable platen 13 may be movable toward/away from the stationary platen 12. The movable platen 13 has notches at positions corresponding to where the tie-bars 16 are arranged.

Note that although the movable platen 13 of the present embodiment has notches arranged at the positions of the tie-bars 16, in alternative embodiments, the notches may be replaced by through holes, for example.

The compression cylinder 18 and a movable mold 33 are mounted in this order to the side of the movable platen 13 facing the stationary platen 12. The movable mold 33 is fixed to the compression cylinder 18 by fixtures 35 such as bolts 35a and clasps 35b (see FIG. 3). On the other hand, a stationary mold 32 is mounted to the side of the stationary platen 12 facing the movable platen 13. The stationary mold 32, the movable mold 33, and a compression core 37 make up a mold unit 30. When the movable platen 13 moves forward, the movable mold 33 and the stationary mold 32 come into contact with each other to execute a mold closing operation. When the movable platen 13 moves backward, the movable mold 33 and the stationary mold 32 move away from one another to execute a mold opening operation.

The toggle mechanism 20 is arranged between the movable platen 13 and the rear platen 15. The toggle mechanism 20 includes a crosshead 24 that is movable back and forth in a direction parallel to the mold opening/closing direction, a second toggle lever 23 that is slidably mounted to the crosshead 24, a first toggle lever 21 that is slidably mounted to the rear platen 15, and a toggle arm 22 that is slidably mounted to the movable platen 13, for example. The first toggle lever 21 and the second toggle lever 23 are coupled by a pin, and the first toggle lever 21 and the toggle arm 22 are coupled by a pin. The illustrated toggle mechanism 20 corresponds to a so-called five-point double toggle mechanism that is arranged to be vertically symmetrical.

The mold clamping motor 26 is for activating the toggle mechanism 20 and may be a servo motor, for example. The mold clamping motor 26 may include a ball-screw mechanism as a motion conversion mechanism for converting a rotational motion into a linear motion. The mold clamping motor 26 moves a drive shaft 25 back and forth to activate the toggle mechanism 20.

In the state where a mold opening operation is completed, the mold clamping motor 26 is driven to rotate in a forward direction to move the crosshead 24 forward and activate the toggle mechanism 20. In this way, the movable platen 13 is moved forward and the movable mold 33 comes into contact with the stationary mold 32 as illustrated in FIG. 1 to thereby complete a mold closing operation.

Then, as the mold clamping motor 26 is driven further in the forward direction, the toggle mechanism 20 generates a clamping force equivalent to a thrust force of the mold clamping motor 26 multiplied by a toggle magnification factor. In this way, the stationary mold 32 and the movable mold 33 are clamped together and a cavity CV is formed between the stationary mold 32 and the movable mold 33. Then, an injection unit (not shown) fills the cavity CV with liquid molding material (e.g., molten resin) and the molding material within the cavity CV is solidified to form a molding product.

Then, when the mold clamping motor 26 is driven in the reverse direction and the crosshead 24 is moved backward to activate the toggle mechanism 20, the movable platen 13 is moved backward to execute a mold opening operation. Then, an ejector (not shown) ejects the molding product from the movable mold 33.

Note that although the mold clamping force is generated using the toggle mechanism 20 in the injection molding machine 10 of the above-described embodiment, other alternative means may be used instead of the toggle mechanism 20 to generate the mold clamping force. For example, the thrust force generated by the mold clamping motor 26 may be directly used as the mold clamping force and transmitted to the movable platen 13. In another example, mold opening and closing operations may be executed by a linear motor, and a mold clamping operation may be executed by an electromagnet.

The injection molding machine 10 of the present embodiment further includes the compression core 37 for compressing the molding material within the cavity CV, a press member 19 for pressing the compression core 37, a hydraulic circuit 40 as a drive circuit for driving the press member 19, and a controller 60 for controlling the hydraulic circuit 40.

As illustrated in FIG. 3, the press member 19 includes a piston 19a and a piston rod 19b. The piston 19a is arranged to be movable back and forth within the compression cylinder 18. The piston 19a divides the interior of the compression cylinder 18 into a front chamber C1 corresponding to a first chamber and a rear chamber C2 corresponding to a second chamber. The piston rod 19b extends in the forward direction from the piston 19a. Because the piston rod 19b is arranged to extend throughout the front chamber C1, the cross-sectional area of the front chamber C1 is smaller than the cross-sectional area of the rear chamber C2.

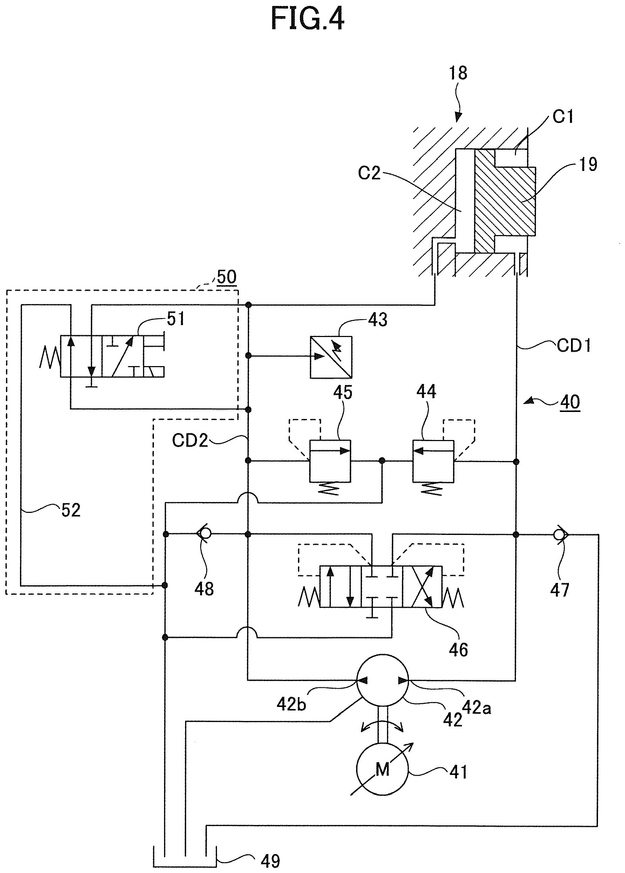

FIG. 4 is a circuit diagram of the hydraulic circuit 40 of the injection molding machine 1 according to the first embodiment. FIG. 4 illustrates a state of a restriction part 50 during operation.

As illustrated in FIG. 4, the hydraulic circuit 40 includes a motor 41 as a drive circuit for driving the press member 19, a hydraulic pump 42, a pressure sensor 43, a first relief valve 44, a second relief valve 45, a flush valve 46, a first check valve 47, a second check valve 48, a tank 49, and an electromagnetic switch valve 51, for example.

The motor 41 drives the hydraulic pump 42 to drive the press member 19. The motor 41 drives the hydraulic pump 42 according to a control signal from the controller 60 controlling a rotation direction and a rotation torque. The motor 41 may be an electric motor or an electric servo motor, for example.

The hydraulic pump 42 includes a first port 42a and a second port 42b. The first port 42a is connected to the front chamber C1 of the compression cylinder 18 via a first flow path CD1, and the second port 42b is connected to the rear chamber C2 of the compression cylinder 18 via a second flow path CD2.

The hydraulic pump 42 is a bidirectional pump that is capable of rotating in both forward and reverse directions. By switching the rotation direction of the motor 41, hydraulic fluid (e.g., oil) may be introduced into one of the first port 42a or the second port 42b and discharged from the other one of the first port 42a or the second port 42b to generate hydraulic pressure. Alternatively, the hydraulic pump 42 may draw hydraulic fluid from a tank 49 and discharge the hydraulic fluid from one of the first port 42a or the second port 42b to generate hydraulic pressure.

When hydraulic fluid that is pressurized by the hydraulic pump 42 and discharged from the second port 42b is supplied to the rear chamber C2 of the compression cylinder 18 via the second flow path CD2, the press member 19 is pushed forward. In turn, the press member 19 comes into contact with the compression core 37 and pushes the compression core 37 to move forward. In this way, the compression core 37 compresses the molding material within the cavity CV.

On the other hand, when hydraulic fluid that is pressurized by the hydraulic pump 42 and discharged from the first port 42a is supplied to the front chamber C1 of the compression cylinder 18 via the first flow path CD1, the press member 19 is moved backward. When the press member 19 is moved backward, the compression core 37 is urged to return to its original position by a spring force of a return spring, for example.

The pressure sensor 43 is for detecting the pressure within the second flow path CD2, which connects the second port 42b of the hydraulic pump 42 to the rear chamber C2 of the compression cylinder 18. The pressure sensor 43 outputs the detection result of detecting the pressure within the second flow path CD2 to the controller 60. The pressure detected by the pressure sensor 43 is substantially equal to the hydraulic pressure within the rear chamber C2 of the compression cylinder 18 and a drive pressure of the press member 19.

The first relief valve 44 opens when the pressure within the first flow path CD1 exceeds a set value so that excess hydraulic fluid within the first flow path CD1 may be returned to the tank 49 and the pressure within the first flow path CD1 may be maintained at or below the set value.

The second relief valve 45 opens when the pressure within the second flow path CD2 exceeds a set value so that excess hydraulic fluid within the second flow path CD2 may be returned to the tank 49 and the pressure within the second flow path CD2 may be maintained at or below the set value.

The flush valve 46 is a 3-position 4-port spool valve for adjusting the amount of hydraulic fluid being circulated to compensate for fluid deficiencies and excesses resulting from the difference in the cross-sectional areas of the front chamber C1 and the rear chamber C2.

The first check valve 47 opens when the pressure within the first flow path CD1 falls below the pressure within the tank 49 so that hydraulic fluid may be supplied from the tank 49 to the first flow path CD1. The second check valve 48 opens when the pressure within the second flow path CD2 falls below the pressure within the tank 49 so that hydraulic fluid may be supplied from the tank 49 to the second flow path CD2.

The electromagnetic switch valve 51 opens/closes a recovery flow path 52, which connects the second flow path CD2 to the tank 49. In this way, the electromagnetic switch valve 51 controls the flow direction of hydraulic fluid that is discharged from the second port 42b of the hydraulic pump 42. The electromagnetic switch valve 51 and the recovery flow path 52 make up the restriction part 50, which restricts the drive pressure of the press member 19 to be less than or equal to a predetermined value.

When the restriction part 50 is not activated, the electromagnetic switch valve 51 closes the recovery flow path 52 and prevents hydraulic fluid from flowing from the second flow path CD2 to the tank 49. Thus, hydraulic fluid that is discharged from the second port 42b of the hydraulic pump 42 is supplied to the rear chamber C2 of the compression cylinder 18 via the second flow path CD2. In this case, the motor 41 is driven so that a set pressure may be equal to the pressure detected by the pressure sensor 43, and the set pressure is used as the drive pressure of the press member 19. The press member 19 pushes the compression core 37 forward so that the compression core 37 compresses the molding material within the cavity CV.

On the other hand, when the restriction part 50 is activated, the electromagnetic switch valve 51 opens the recovery flow path 52 to allow hydraulic fluid to flow from the second flow path CD2 to the tank 49. The pressure within the rear chamber C2 of the compression cylinder 18 is restricted to be less than or equal to a predetermined value so that the drive pressure of the press member 19 may be restricted to be less than or equal to the predetermined value.

The electromagnetic switch valve 51 may open the recovery flow path 52 when it does not receive a control signal from the controller 60, and the electromagnetic switch valve 51 may close the recovery flow path 52 when it receives a control signal from the controller 60. In this way, the restriction part 50 may be activated to restrict the drive pressure of the press member 19 to be less than or equal to a predetermined value when some type of failure occurs at a connection circuit between the controller 60 and the restriction part 50, for example.

When the electromagnetic switch valve 51 receives a test signal from the controller 60, it transmits a response signal to the controller 60. The controller 60 checks whether it has received the response signal from the electromagnetic switch valve 51 within a predetermined time period after transmitting the test signal. In this way, the controller 60 may determine whether some type of failure has occurred at the connection circuit between the controller 60 and the restriction part 50.

In the following, operations of the injection molding machine 10 are described. The operations of the injection molding machine 10 are controlled by the controller 60. The controller 60 may include a CPU, a ROM, a RAM, a storage device such as a hard disk, an input interface, an output interface, a timer, and a counter, for example. The controller 60 implements various functions by having the CPU execute a program that is stored in the ROM or the storage device, for example.

During one cycle, the injection molding machine 10 performs a mold closing process for closing the mold unit 30, a mold clamping process for clamping the mold unit 30, a filling process for filling the mold unit 30 with liquid molding material, a hold pressure process for pressurizing the molding material filled into the mold unit 30, a cooling process for solidifying the molding material within the mold unit 30, a plasticizing process for plasticizing the molding material to be used for manufacturing the next molding product, a mold opening process for opening the mold unit 30, and an ejection process for ejecting the molding product from the opened mold unit 30. By repeatedly performing the above sequence of processes, the injection molding machine 10 may successively manufacture multiple molding products. The filling process and the hold pressure process may be performed during the mold clamping process. Also, a compression process for compressing the molding material within the mold unit 30 using the compression core 37 may be performed during the mold clamping process. In certain embodiments, the plasticizing process may be performed during the cooling process in order to reduce the duration of one molding cycle.

The controller 60 may operate in normal mode and confirmation mode. Mode switching may be performed according to an operation signal from an input part 62, for example. The input part 62 accepts an input operation by a user and outputs an operation signal according to the accepted input operation. The controller 60 selects the normal mode or the confirmation mode according to the operation signal from the input part 62. The controller 60 may display the input operation made by the user at a display part 64. An input operation for selecting the confirmation mode may be made periodically or when the mold unit 30 is to be exchanged, for example.

Note that although the input part 62 and the display part 64 are represented as separate parts in the present embodiment, the input part 62 and the display part 64 may alternatively be integrated into a single part such as a touch panel.

In normal mode, the controller 60 conducts injection molding operations according to molding conditions designated by the user through input operations of the input part 62. In the compression process, the controller 60 drives the motor 41 so that the press member 19 pushes the compression core 37 forward and the compression core 37 compresses the molding material within the cavity CV. A condition for starting the compression process may be that the mold unit 30 be closed and the controller 60 receive a response signal within a predetermined time period after transmitting a test signal, for example. The condition for starting the compression process may be the same for both the normal mode and the confirmation mode, for example.

In normal mode, the controller 60 detects whether a condition for operating the restriction part 50 is satisfied and controls the restriction part 50 based on the detection result. The condition for operating the restriction part 50 in normal mode may be different from the condition for starting the compression process. For example, the condition for operating the restriction part 50 may require at least one of the following conditions to be satisfied: (1) the mold unit 30 is open, and/or (2) the controller 60 does not receive a response signal within a predetermined time period after transmitting a test signal.

In the case where (1) the mold unit 30 is open; namely, when the movable mold 33 and the stationary mold 32 are separated from each other, the controller 60 refrains from transmitting a control signal to the electromagnetic switch valve 51 so that the restriction part 50 may be activated. In this way, the drive pressure of the press member 19 may be controlled to be less than or equal to a predetermined value so that the movable mold 33 may be prevented from being disengaged from the compression cylinder 18. The mold unit 30 is open from right after the mold opening process is started until right before the mold closing process is completed. Although the mold unit 30 is normally closed during the mold clamping process, the mold unit 30 may open during the mold clamping process for some reason. When the mold unit 30 is closed; namely, when that movable mold 33 and the stationary mold 32 are in contact with each other, the stationary mold 32 supports the movable mold 33 that is being pushed forward so that the movable mold 33 may be prevented from being disengaged from the compression cylinder 18 even when the drive pressure of the press member 19 is not controlled.

The controller 60 may determine whether the mold unit 30 is open or closed based on at least one of a detection value of a clamping force sensor S1, a position detected by a position sensor S2, or a detection signal of a presence detection sensor S3.

The clamping force sensor S1 detects the clamping force acting on the mold unit 30. For example, the clamping force sensor S1 may be a strain sensor that detects the strain on the tie-bars 16, which extend according to the clamping force. The clamping force sensor S1 outputs a detection value of the detected clamping force to the controller 60. The controller 60 may determine that the mold unit 30 is closed when the detection value of the clamping force detected by the clamping force sensor S1 is greater than or equal to a predetermined value. The controller 60 may determine that the mold unit 30 is open when the detection value of the clamping force detected by the clamping force sensor S1 is less than the predetermined value.

The position sensor S2 detects the position of the movable platen 13 with respect to the stationary platen 12. For example, the position sensor S2 may be an encoder that detects the rotational position of the mold clamping motor 26. The position sensor S2 outputs the detected position to the controller 60. The controller 60 may determine that the mold unit 30 is closed when the position detected by the position sensor S2 corresponds to a predetermined position. The controller 60 may determine that the mold unit 30 is open when the position detected by the position sensor S2 does not correspond to the predetermined position.

The presence detection sensor S3 detects whether a detection object (e.g., crosshead 24) is at a predetermined position. For example, the presence detection sensor S3 may be a limit switch that is attached to the movable platen 13 and is configured to detect the presence of the crosshead 24 at a predetermined position upon coming into contact with a member fixed to the crosshead 24. The limit switch outputs a detection signal when it detects the presence of the crosshead 24 at the predetermined position, but the limit switch does not output the detection signal when it does not detect the presence of the crosshead at the predetermined position. Thus, the controller 60 may determine that the mold unit 30 is closed when it receives a detection signal from the presence detection sensor S3, and the controller 60 may determine that the mold unit 30 is open when it does not receive a detection signal from the presence detection sensor S3.

Note that although a contact-type limit switch is used as the presence detection sensor S3 in the above-described embodiment, the presence detection sensor S3 may also be a non-contact-type proximity switch or a gap sensor, for example.

In the case where (2) the controller 60 does not receive a response signal within a predetermined time period after transmitting a test signal, this indicates a possible failure of the connection circuit between the controller 60 and the restriction part 50. Thus, the controller 60 refrains from transmitting a control signal to the electromagnetic switch valve 51 to activate the restriction part 50. In this way, the drive pressure of the press member 19 may be controlled to be less than or equal to a predetermined value regardless of the position of the movable mold 33 with respect to the stationary mold 32 so that the movable mold 33 may be prevented from being disengaged from the compression cylinder 18.

In normal mode, the controller 60 transmits a control signal to the electromagnetic switch valve 51 when the mold unit 30 is closed and the controller 60 receives a response signal within a predetermined time period after transmitting a test signal so as to prevent the restriction part 50 from being activated. In this way, the controller 60 may lift the restriction imposed by the restriction part 50.

On the other hand, in confirmation mode, the controller 60 determines whether the drive pressure of the press member 19 can be controlled. For example, such a determination may include at least one of the following: (A) determination of whether the drive pressure of the press member 19 can be restricted; (B) determination of whether a response signal can be received within a predetermined time period after transmitting a test signal; and/or (C) determination of the accuracy of the detection result of whether the mold unit 30 is open or closed. For example, the controller 60 may determine that the drive pressure of the press member 19 can be controlled when it determines that the drive pressure of the press member 19 may be restricted, the response signal can be received within the predetermined time period, and the detection result of whether the mold unit 30 is open/closed is accurate. On the other hand, the controller 60 may determine that the drive pressure of the press member 19 cannot be controlled upon making a determination that is contrary to the above determinations (e.g., a determination that the drive pressure of the press member 19 cannot be controlled).

In the case of making determination (A), the controller 60 conducts test molding operations where it activates the restriction part 50 in the compression process and determines whether the drive pressure of the press member 19 can be restricted based on a detection result of detecting the drive pressure of the press member 19. The drive pressure of the press member 19 may be detected by the pressure sensor 43, for example. The controller 60 may determine that the drive pressure of the press member 19 can be restricted when the detection value of the pressure sensor 43 is less than or equal to a predetermined value. The controller 60 may determine that the drive pressure of the press member 19 cannot be restricted when the detection value of the pressure sensor 43 is greater than the predetermined value. Based on the result of determination (A), the controller 60 may detect whether a failure has occurred at the restriction part 50. A failure of the restriction part 50 may include operation failure of a valving element of the electromagnetic switch valve 51, for example.

In the case of making determination (A), the controller 60 activates the restriction part 50 in the compression process as described above. Thus, the condition for operating the restriction part 50 in confirmation mode may be the same as the condition for starting the compression process. That is, the condition for operating the restriction part in confirmation mode may be different from the condition for operating the restriction mode in normal mode. For example, the condition for operating the restriction part 50 in confirmation mode and the condition for starting the compression process may be that the mold unit 30 be closed and the controller 60 receive a response signal within a predetermined time period after transmitting a test signal.

In confirmation mode, the controller 60 may detect whether the mold unit 30 is open or closed before starting the compression process and prevent the compression process from being started upon detecting that the mold unit 30 is open. That is, the controller 60 may allow the compression process to be started only when the mold unit 30 is closed, and only in such case would the motor 41 be driven and the press member 19 be driven. Thus, in a case where the restriction part 50 is experiencing some type of failure so that it is unable to restrict the drive pressure of the press member 19, the movable mold 33 that is pushed forward may be supported by the stationary mold 32 so that the movable mold 33 may be prevented from being disengaged from the compression cylinder 18.

Also, in confirmation mode, the controller 60 transmits a test signal to the restriction part 50 before starting the compression process. The controller 60 may prevent the compression process from starting when it does not receive a response signal within a predetermined time period after transmitting the test signal. In this way, the motor 41 may be driven and the press member 19 may be driven only in a case where there is no failure occurring at the connection circuit between the controller 60 and the restriction part 50.

In confirmation mode, the controller 60 may read a preregistered value that is stored in its storage device and use the preregistered value as a set value for the drive pressure of the press member 19. In this way, even if the restriction part 50 is experiencing some type of failure so that it is unable to restrict the drive pressure of the press member 19, the drive pressure of the press member 19 may be controlled to a pressure that would not cause disengagement of the movable mold 33 from the compression cylinder 18. The set value for the drive pressure of the press member 19 in confirmation mode may be lower than a set value for the drive pressure of the press member 19 in normal mode.

Note that although the cavity CV within the mold unit 30 is actually filled with molding material even in confirmation mode in the above-described embodiment, the cavity CV does not necessarily have to be filled with molding material when operating in confirmation mode. For example, in the case of making determination (A), by activating the restriction part 50 upon driving the press member 19, a determination of whether a failure has occurred at the restriction part 50 may be made without filling the cavity CV within the mold unit 30 with molding material.

In the case of making determination (B), the controller 60 transmits a test signal to the restriction part 50 and determines whether a response signal is received with a predetermined time period after transmitting the test signal. The determination (B) may be made while injection molding operations are halted. By making determination (B), the controller 60 may detect whether a failure has occurred at the connection circuit between the controller 60 and the restriction part 50.

In the case of making determination (C), the controller 60 may determine the accuracy of the detection result of detecting whether the mold unit 30 is open or closed by comparing the detection result of detecting whether the mold unit 30 is open or closed with the actual state of the mold unit 30. The determination (C) may be made while injection molding operations are halted. The actual state of the mold unit 30 may be determined based on an input operation made by the user, for example. By making determination (C), the controller 60 may detect whether failure has occurred at the sensor that is used for detecting the open/closed state of the mold unit 30 (e.g., sensor Sl), for example.

The controller 60 may determine whether the drive pressure of the press member 19 may be controlled based on a determination result of at least one of the above determinations (A)-(C). The controller 60 may allow operations in normal mode when it determines that the drive pressure of the press member 19 can be controlled in confirmation mode. The controller 60 may prohibit operations in normal mode when it determines that the drive pressure of the press member 19 cannot be controlled in confirmation mode. Operations in normal mode may be injection molding operations conducted under molding conditions designated by the user, for example. Such operations in normal mode may include full automatic operations for successively manufacturing multiple molding products under the molding conditions designated by the user, for example. The full automatic operations may be started in response to a predetermined input operation of the input part 62 by the user, for example. The full automatic operations may be prohibited by refraining from displaying a start button for starting the full automatic operations at a touch panel or invalidating an operation (e.g., selection) of the start button for starting the full automatic operations. For example, operations involving driving the pressure member 19 at a high drive pressure designated by the user may be prohibited until the controller 60 confirms that the drive pressure of the press member 19 can be controlled. In this way, the movable mold 33 may be prevented from being disengaged from the compression cylinder 18.

In order to improve user-friendliness, the controller 60 may display the determination result of the determination made in confirmation mode at the display part 64, for example. Note that although the display part 64 is used as an output part for outputting the determination result of the determination made in confirmation mode in the above-described embodiment, other output means such as a speaker may be used as well.

### [Second Embodiment]

A second embodiment of the present invention relates to a hydraulic circuit 140 for driving the press member 19.

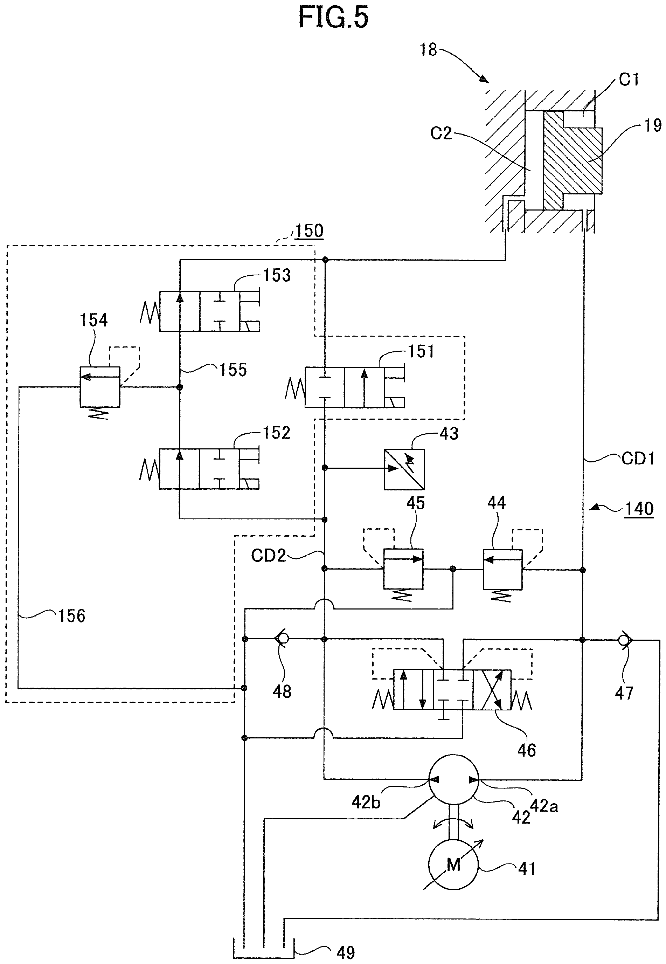

FIG. 5 is a circuit diagram of the hydraulic circuit 140 according to the second embodiment. FIG. 5 illustrates a state of a restriction part 150 during operation. The hydraulic circuit 140 illustrated in FIG. 5 may be used in place of the hydraulic circuit 40 illustrated in FIG. 4, and may be controlled by the controller 60, for example. The hydraulic circuit 140 illustrated in FIG. 5 varies from the hydraulic circuit 40 illustrated in FIG. 4 in its configuration of the restriction part 150 for restricting the drive pressure of the press member 19. Note that other features of the hydraulic circuit 140 of the second embodiment may be substantially identical to those of the hydraulic circuit 40 of the first embodiment so that their descriptions are omitted below.

The restriction part 150 of the hydraulic circuit 140 includes a first electromagnetic switch valve 151, a second electromagnetic switch valve 152, a third electromagnetic switch valve 153, a relief valve 154, a bypass flow path 155, and a recovery flow path 156.

The first electromagnetic switch valve 151 is arranged midstream of the second flow path CD2 and is configured to open/close the second flow path CD2 to control the flow direction of hydraulic fluid that is discharged from the second port 42b of the hydraulic pump 42.

The second electromagnetic switch valve 152 and the third electromagnetic switch valve 153 are arranged midstream of the bypass flow path 155 and are configured to open/close the bypass flow path 155 to allow/prevent the flow of hydraulic fluid from the bypass flow path 155 to the tank 49. The bypass flow path 155 is a flow path for bypassing the first electromagnetic switch valve 151, and both ends of the bypass flow path 155 are connected to the second flow path CD2.

The relief valve 154 opens when the pressure within the bypass flow path 155 exceeds a predetermined value so that excess hydraulic fluid within the bypass flow path 155 may be returned to the tank 49 via the recovery flow path 156. In this way, the pressure within the bypass flow path 155 may be maintained less than or equal to the predetermined value.

In the case where the restriction part 150 is not activated, the second electromagnetic switch valve 152 and the third electromagnetic switch valve 153 closes the bypass flow path 155 and prevents hydraulic fluid from flowing from the bypass flow path 155 to the tank 49. Also, the first electromagnetic switch valve 151 opens the second flow path CD2 so that hydraulic fluid that is discharged from the second port 42b of the hydraulic pump 42 may be supplied to the rear chamber C2 of the compression cylinder 18 via the second flow path CD2. In this case, the motor 41 is driven so that a set pressure may be equal to the pressure detected by the pressure sensor 43, and the set pressure is used as the drive pressure of the press member 19.

On the other hand, in the case where the restriction part 50 is activated, the first electromagnetic switch valve 151 closes the second flow path CD2, and the second electromagnetic switch valve 152 and the third electromagnetic switch valve 153 open the bypass flow path 155. In this case, hydraulic pressure generated at the hydraulic pump 42 is transmitted to the rear chamber C2 of the compression cylinder 18 via the bypass flow path 155. When the pressure within the bypass flow path 155 exceeds a predetermined value, the relief valve 154 opens and excess hydraulic fluid within the bypass flow path 155 is returned to the tank 49 so that the pressure within the bypass flow path 155 may be maintained at or below the predetermined value. In this way, the drive pressure of the press member 19 may be restricted to be less than or equal to the predetermined value.

The electromagnetic switch valve 151 may close the second flow path CD2 when it does not receive a control signal from the controller 60, and may open the second flow path CD2 when it receives a control signal from the controller 60. The second electromagnetic switch valve 152 and the third electromagnetic switch valve 153 may open the bypass flow path 155 when they do not receive a control signal from the controller 60, may close the bypass flow path 155 when they receive a control signal from the controller 60. In this way, the restriction part 150 may be activated and the drive pressure of the press member 19 may be restricted to be less than or equal to a predetermined value in a case where failure occurs at one or more of connection circuits connecting the first electromagnetic switch valve 151, the second electromagnetic switch valve 152, and the third electromagnetic switch valve 153 to the controller 60.

The first electromagnetic switch valve 151, the second electromagnetic switch valve 152, and the third electromagnetic switch valve 153 are each configured to transmit a response signal to the controller 60 upon receiving a test signal from the controller 60. The controller 60 checks whether the response signal has been received within a predetermined time period after transmitting the test signal. In this way, the controller may determine whether a failure has occurred at the connection circuits between the restriction part 150 and the controller 60. The controller 60 may determine that no failure has occurred at the connection circuits between the restriction part 150 and the controller 60 when it receives a response signal from each of the first electromagnetic switch valve 151, the second electromagnetic switch valve 152, and the third electromagnetic switch valve 153 within the predetermined time period. On the other hand, the controller 60 may determine that a failure has occurred at the connection circuits between the restriction part 150 and the controller when it does not receive a response signal within the predetermined time period from at least one of the first electromagnetic switch valve 151, the second electromagnetic switch valve 152, and the third electromagnetic switch valve 153.

Note that control operations by the controller 60 in normal mode and control operations of the controller 60 in confirmation mode in the present embodiment may be identical to those of the first embodiment so that their descriptions are omitted.

### [Third Embodiment]

A third embodiment of the present invention relates to a hydraulic circuit 240 for driving the press member 19.

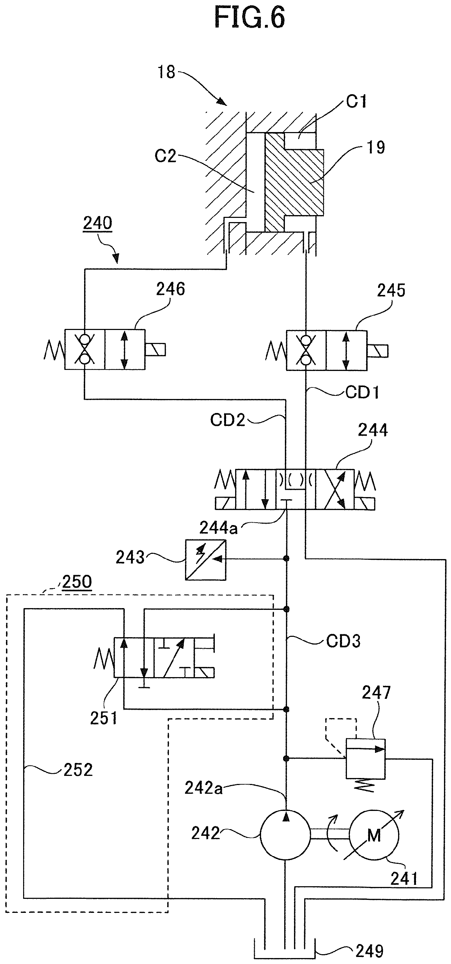

FIG. 6 is a circuit diagram of the hydraulic circuit 240 according to the third embodiment. FIG. 6 illustrates a state of a restriction part 250 during operation. The hydraulic circuit 240 illustrated in FIG. 6 may be used in place of the hydraulic circuit 40 illustrated in FIG. 4, for example.

The hydraulic circuit 240 includes a motor 241, a hydraulic pump 242, a pressure sensor 243, a first direction control valve 244, a second direction control valve 245, a third direction control valve 246, a relief valve 247, a tank 249, and an electromagnetic switch valve 251.

The motor 241 drives the hydraulic pump 241 to drive the press member 19. The motor 241 drives the hydraulic pump 242 at a certain rotational torque according to a control signal from the controller 60. The motor 241 may be an electric motor or and electric servo motor, for example.

The hydraulic pump 242 is a unidirectional pump that is configured to draw hydraulic fluid from the tank 249 and discharge the hydraulic fluid from a discharge port 242a.

The pressure sensor 243 is for detecting the pressure within a connection flow path CD3, which connects the discharge port 242a of the hydraulic pump 242 to an inflow port 244a of the first direction control valve 244. The pressure sensor 243 outputs a detection result of detecting the pressure within the connection flow path CD3 to the controller 60.

The first direction control valve 244 is an electromagnetic 3-positoin 4-port spool valve that controls the flow direction of hydraulic fluid that is discharged from the discharge port 242a of the hydraulic pump 242 under control by the controller 60. The position of the spool of the first direction control valve 244 is basically switched between three positions. The first direction control valve 244 may be a proportional control valve, for example.

In a case where the position of a valving element of the first direction control valve 244 is set to a left side position in FIG. 6, hydraulic fluid that is pressurized by the hydraulic pump 242 is supplied to the rear chamber C2 of the compression cylinder 18 via the second flow path CD2. In this case, the press member 19 is moved forward and hydraulic fluid within the front chamber C1 of the compression cylinder 18 returns to the tank 49 via the first flow path CD1.

In a case where the position of the valving element of the first direction control valve 244 is set to a right side position in FIG. 6, hydraulic fluid that is pressurized by the hydraulic pump 242 is supplied to the front chamber C1 of the compression cylinder 18 via the first flow path CD1. In this case, the press member 19 is moved backward and hydraulic fluid within the rear chamber C2 of the compression cylinder 18 returns to the tank 49 via the second flow path CD2.

In a case where the position of the valving element of the first direction control valve 244 is set to a center position in FIG. 6, both the hydraulic fluid within the front chamber C1 and the hydraulic fluid within the rear chamber C2 of the compression cylinder 18 return to the tank 49.

The second direction control valve 245 is an electromagnetic valve that is arranged midstream of the first flow path CD1, which connects the front chamber C1 of the compression cylinder 18 to the first direction control valve 244. The second direction control valve 245 is configured to open/close the first flow path CD1 under control by the controller 60. By closing the first flow path CD1, the second direction control valve 245 may hold the pressure within the first flow path CD1 of the compression cylinder 18.

The third direction control valve 246 is an electromagnetic valve that is arranged midstream of the second flow path CD2, which connects the rear chamber C2 of the compression cylinder 18 to the first direction control valve 244. The third direction control valve 246 is configured to open/close the second flow path CD2 under control by the controller 60. By closing the second flow path CD2, the third direction control valve 246 may hold the pressure within the second flow path CD2 of the compression cylinder 18.

The relief valve 247 allows excess hydraulic fluid within the connection flow path CD3 to return to the tank 49 when the pressure within the connection flow path CD3 exceeds a predetermined value. In this way, the relief valve 247 maintains the pressure within the connection flow path CD3 to be less than or equal to the predetermined value.

The electromagnetic switch valve 251 is configured to open/close the recovery flow path 252, which connects the connection flow path CD3 to the tank 49. In this way, the electromagnetic switch valve 251 controls the flow direction of hydraulic fluid that is discharged from the discharge port 242a of the hydraulic port 242. The electromagnetic switch valve 251 and the recovery flow path 252 make up the restriction part 250 for restricting the drive pressure of the press member 19.

In a case where the restriction part 250 is not activated, the electromagnetic switch valve 251 closes the recovery flow path 252 and prevents hydraulic fluid from flowing from the connection flow path CD3 to the tank 49. Thus, hydraulic fluid that is discharged from the hydraulic pump 42 is supplied to the rear chamber C2 of the compression cylinder 18 via the connection flow path CD3, the first direction control valve 244, and the second flow path CD2. In this case, the motor 241 is driven so that a set pressure may be equal the pressure detected by the pressure sensor 243, and the set pressure is used as the drive pressure of the press member 19.

On the other hand, in a case where the restriction part 250 is activated, the electromagnetic switch valve 251 opens the recovery flow path 252 so that hydraulic fluid may flow from the connection flow path CD3 to the tank 49. In this way, the pressure within the rear chamber C2 of the compression cylinder 18 may be restricted to be less than or equal to a predetermined value, and the drive pressure of the press member 19 may be restricted to be less than or equal to the predetermined value.

The electromagnetic switch valve 251 may open the recovery flow path 252 when it does not receive a control signal from the controller 60, and may close the recovery flow path 252 when it receives a control signal from the controller 60. In this way, the restriction part 250 may be activated when some type of failure occurs at a connection circuit between the electromagnetic switch valve 251 and the controller 60 so that the drive pressure of the press member 19 may be restricted to be less than or equal to a predetermined value.

When the electromagnetic switch valve 251 receives a test signal from the controller 60, it transmits a response signal to the controller 60. In turn, the controller 60 checks whether it has received the response signal within a predetermined time period after transmitting the test signal. In this way, the controller 60 may determine whether a failure has occurred at the connection circuit between the restriction part 250 and the controller 60.

Note that control operations by the controller 60 in normal mode and control operations of the controller 60 in confirmation mode in the present embodiment may be identical to those of the first embodiment so that their descriptions are omitted.

Further, although the present invention has been described above in connection with certain illustrative embodiments, the present invention is not limited to these embodiments, and numerous variations and modifications may be made without departing from the scope of the present invention as it is defined in the appended claims.

For example, although the injection molding machine 10 illustrated above corresponds to a horizontal type injection molding machine with the mold opening/closing direction oriented horizontally, the present invention may also be applied to a vertical type injection molding machine with the mold opening/closing direction oriented vertically. In this case, the compression cylinder 18 may be attached to the stationary platen 12, and the compression core 37 may be arranged at the stationary mold 32 side, for example.

Also, although the compression core 37 illustrated above is configured to compress the molding material within the cavity CV during a mold clamping process, the compression core 37 may also be configured to assist the ejector in ejecting a molding product during an ejection process, for example.

Also, although a hydraulic circuit is used as a drive circuit for driving the press member 19 in the embodiments described above, an electric circuit may be used as the drive circuit in other alternative embodiments.

## Claims

1. An injection molding machine (10) comprising:
a press member (19) configured to press a compression core (37), which is configured to compress a molding material within a cavity (CV) of a mold unit (30);
a drive circuit (40) configured todrive the press member (19); and
a controller (60) configured tocontrol the drive circuit (40);
wherein the drive circuit (40) includes a restriction part (50, 150, 250) configured to restrict a drive pressure of the press member (19) to be less than or equal to a predetermined value; and **characterized by**
the controller (60) is configured to operate in confirmation mode, which includes determining whether the drive pressure of the press member (19) can be controlled.

2. The injection molding machine (10) as claimed in claim 1, wherein
in the confirmation mode, the controller (60) is configured to activate the restriction part (50, 150, 250) upon driving the press member (19), and configured to determine whether the drive pressure of the press member (19) can be controlled based on a detection result of detecting the drive pressure of the press member (19).

3. The injection molding machine (10) as claimed in claim 2, wherein
in the confirmation mode, the controller (60) is configured to determine whether the mold unit (30) is open or closed before starting drive operations of the press member (19), and configured to prevent the drive operations of the press member (19) from being started upon determining that the mold unit (30) is open.

4. The injection molding machine (10) as claimed in claim 2 or 3, wherein
when the restriction part (50, 150, 250) receives a test signal from the controller (60), the restriction part (50, 150, 250) is configured to transmit a response signal responding to the test signal to the controller (60); and
in the confirmation mode, the controller (60) is configured to transmit the test signal to the restriction part (50, 150, 250) before starting drive operations of the press member (19), and configured to prevent the drive operations of the press member (19) from being started in a case where the response signal is not received within a predetermined time period after transmitting the test signal.

5. The injection molding machine (10) as claimed in any one of claims 2-4, wherein
a preregistered value stored in the controller (60) is usable as a set value for the drive pressure of the press member (19) in the confirmation mode.

6. The injection molding machine (10) as claimed in any one of claims 1-5, wherein
when the restriction part (50, 150, 250) receives a test signal from the controller (60), the restriction part (50, 150, 250) is configured to transmit a response signal responding to the test signal to the controller (60); and
in the confirmation mode, the controller (60) is configured to check whether the response signal is received within a predetermined time period after transmitting the test signal.

7. The injection molding machine (10) as claimed in any one of claims 1-6, wherein
in the confirmation mode, the controller (60) is configured to compare a detection result of detecting whether the mold unit (30) is open or closed with an actual state of the mold unit (30), and configured to determine an accuracy of the detection result of detecting whether the mold unit (30) is open or closed.

8. The injection molding machine (10) as claimed in any one of claims 1-7, wherein
the controller (60) is configured to allow execution of an operation under a molding condition designated by a user upon determining, in the confirmation mode, that the drive pressure of the press member (19) can be controlled; and
the controller (60) is configured to prohibit execution of the operation under the molding condition designated by the user upon determining, in the confirmation mode, that the drive pressure of the press member (19) cannot be controlled.

9. The injection molding machine (10) as claimed in any one of claims 1-8, wherein
the controller (60) is configured to prompt an output part (64) to output a determination result obtained in the confirmation mode.

## Patentansprüche

1. Spritzgießmaschine (10), umfassend:
ein Presselement (19), das konfiguriert ist, einen Kompressionskern (37) zu pressen, der konfiguriert ist, ein Formmaterial innerhalb eines Hohlraums (CV) einer Formeinheit (30) zu komprimieren;
eine Antriebsschaltung (40), die konfiguriert ist, das Presselement (19) anzutreiben; und
eine Steuerung (60), die konfiguriert ist, die Antriebsschaltung (40) zu steuern;
wobei die Antriebsschaltung (40) ein Begrenzungsteil (50, 150, 250) enthält, das konfiguriert ist, einen Antriebsdruck des Presselements (19) auf kleiner oder gleich einen vorbestimmten Wert zu begrenzen; und **dadurch gekennzeichnet, dass**
die Steuerung (60) konfiguriert ist, im Bestätigungsmodus zu arbeiten, der ein Bestimmen enthält, ob der Antriebsdruck des Presselements (19) gesteuert werden kann.

2. Spritzgießmaschine (10) nach Anspruch 1, wobei
die Steuerung (60) im Bestätigungsmodus konfiguriert ist, das Begrenzungsteil (50, 150, 250) beim Antreiben des Presselements (19) zu aktivieren, und konfiguriert ist, zu bestimmen, ob der Antriebsdruck des Presselements (19) basierend auf einem Erfassungsergebnis einer Erfassung des Antriebsdrucks des Presselements (19) gesteuert werden kann.

3. Spritzgießmaschine (10) nach Anspruch 2, wobei
die Steuerung (60) im Bestätigungsmodus konfiguriert ist, vor Start von Fahrbetrieben des Presselements (19) zu bestimmen, ob die Formeinheit (30) offen oder geschlossen ist, und konfiguriert ist, den Start der Fahrbetriebe des Presselements (19) zu verhindern, wenn bestimmt wird, dass die Formeinheit (30) offen ist.

4. Spritzgießmaschine (10) nach Anspruch 2 oder 3, wobei
wenn das Begrenzungsteil (50, 150, 250) ein Testsignal von der Steuerung (60) empfängt, das Begrenzungsteil (50, 150, 250) konfiguriert ist, ein Antwortsignal als Antwort auf das Testsignal an die Steuerung (60) zu senden; und
die Steuerung (60) im Bestätigungsmodus konfiguriert ist, das Testsignal vor Start von Fahrbetrieben des Presselements (19) an das Begrenzungsteil (50, 150, 250) zu senden und konfiguriert ist, den Start der Fahrbetriebe des Presselements (19) zu verhindern, wenn das Antwortsignal nicht innerhalb einer vorbestimmten Zeitperiode nach Senden des Testsignals empfangen wird.

5. Spritzgießmaschine (10) nach einem der Ansprüche 2-4, wobei
ein vorregistrierter Wert, der in der Steuerung (60) gespeichert ist, als Sollwert für den Antriebsdruck des Presselements (19) im Bestätigungsmodus verwendbar ist.

6. Spritzgießmaschine (10) nach einem der Ansprüche 1-5, wobei
wenn das Begrenzungsteil (50, 150, 250) ein Testsignal von der Steuerung (60) empfängt, das Begrenzungsteil (50, 150, 250) konfiguriert ist, ein Antwortsignal als Antwort auf das Testsignal an die Steuerung (60) zu senden; und
die Steuerung (60) im Bestätigungsmodus konfiguriert ist, zu prüfen, ob das Antwortsignal innerhalb einer vorbestimmten Zeitperiode nach Senden des Testsignals empfangen wird.

7. Spritzgießmaschine (10) nach einem der Ansprüche 1-6, wobei
die Steuerung (60) im Bestätigungsmodus konfiguriert ist, ein Erfassungsergebnis einer Erfassung, ob die Formeinheit (30) offen oder geschlossen ist, mit einem tatsächlichen Zustand der Formeinheit (30) zu vergleichen, und konfiguriert ist, eine Exaktheit des Erfassungsergebnisses einer Erfassung, ob die Formeinheit (30) offen oder geschlossen ist, zu bestimmen.

8. Spritzgießmaschine (10) nach einem der Ansprüche 1-7, wobei
die Steuerung (60) konfiguriert ist, eine Ausführung eines Betriebs unter einer Formungsbedingung, die von einem Anwender angegeben ist, bei einer Bestimmung, im Bestätigungsmodus, dass der Antriebsdruck des Presselements (19) gesteuert werden kann, zu erlauben; und
die Steuerung (60) konfiguriert ist, eine Ausführung des Betriebs unter der Formungsbedingung, die vom Anwender angegeben ist, bei einer Bestimmung, im Bestätigungsmodus, dass der Antriebsdruck des Presselements (19) nicht gesteuert werden kann, zu untersagen.

9. Spritzgießmaschine (10) nach einem der Ansprüche 1-8, wobei
die Steuerung (60) im Bestätigungsmodus konfiguriert ist, ein Ausgabeteil (64) zu veranlassen, ein Bestimmungsergebnis auszugeben, das im Bestätigungsmodus erhalten wird.

## Revendications

1. Machine de moulage par injection (10) comprenant :
un élément de pressage (19) configuré pour presser un coeur de compression (37) qui est configuré pour compresser un matériau de moulage dans une cavité (CV) d'une unité de moule (30) ;
un circuit d'entraînement (40) configuré pour entraîner l'élément de pressage (19) ; et
un élément de commande (60) configuré pour commander le circuit d'entraînement (40) ;
dans laquelle le circuit d'entraînement (40) inclut une partie de restriction (50, 150, 250) configurée pour restreindre une pression d'entraînement de l'élément de pressage (19) pour qu'elle soit inférieure ou égale à une valeur prédéterminée ; et **caractérisée en ce que**
l'élément de commande (60) est configuré pour fonctionner en mode de confirmation, qui inclut le fait de déterminer si la pression d'entraînement de l'élément de pressage (19) peut être commandée.

2. Machine de moulage par injection (10) selon la revendication 1, dans laquelle
dans le mode de confirmation, l'élément de commande (60) est configuré pour activer la partie de restriction (50, 150, 250) suite à l'entraînement de l'élément de pressage (19), et configuré pour déterminer si la pression d'entraînement de l'élément de pressage (19) peut être commandée sur la base d'un résultat de détection de la pression d'entraînement de l'élément de pressage (19).

3. Machine de moulage par injection (10) selon la revendication 2, dans laquelle
dans le mode de confirmation, l'élément de commande (60) est configuré pour déterminer si l'unité de moule (30) est ouverte ou fermée avant le démarrage des opérations d'entraînement de l'élément de pressage (19), et configuré pour empêcher le démarrage des opérations d'entraînement de l'élément de pressage (19) suite à la détermination de l'ouverture de l'unité de moule (30).

4. Machine de moulage par injection (10) selon la revendication 2 ou 3, dans laquelle
lorsque la partie de restriction (50, 150, 250) reçoit un signal test de l'élément de commande (60), la partie de restriction (50, 150, 250) est configurée pour transmettre un signal de réponse répondant au signal test à l'élément de commande (60) ; et
dans le mode de confirmation, l'élément de commande (60) est configuré pour transmettre le signal test à la partie de restriction (50, 150, 250) avant le démarrage des opérations d'entraînement de l'élément de pressage (19), et configuré pour empêcher le démarrage des opérations d'entraînement de l'élément de pressage (19) dans un cas où le signal de réponse n'est pas reçu dans une période de temps prédéterminée après la transmission du signal test.

5. Machine de moulage par injection (10) selon l'une quelconque des revendications 2 à 4, dans laquelle
une valeur préenregistrée stockée dans l'élément de commande (60) est utilisée en tant que valeur réglée pour la pression d'entraînement de l'élément de pressage (19) dans le mode de confirmation.

6. Machine de moulage par injection (10) selon l'une quelconque des revendications 1 à 5, dans laquelle
lorsque la partie de restriction (50, 150, 250) reçoit un signal test de l'élément de commande (60), la partie de restriction (50, 150, 250) est configurée pour transmettre un signal de réponse répondant au signal test à l'élément de commande (60) ; et
dans le mode de confirmation, l'élément de commande (60) est configuré pour vérifier si le signal de réponse est reçu dans une période de temps prédéterminée après la transmission du signal test.

7. Machine de moulage par injection (10) selon l'une quelconque des revendications 1 à 6, dans laquelle
dans le mode de confirmation, l'élément de commande (60) est configuré pour comparer un résultat de détection consistant à détecter si l'unité de moule (30) est ouverte ou fermée avec un état réel de l'unité de moule (30), et configuré pour déterminer une précision du résultat de détection consistant à détecter si l'unité de moule (30) est ouverte ou fermée.

8. Machine de moulage par injection (10) selon l'une quelconque des revendications 1 à 7, dans laquelle
l'élément de commande (60) est configuré pour permettre l'exécution d'une opération sous une condition de moulage conçue par un utilisateur suite à la détermination, dans le mode de confirmation, que la pression d'entraînement de l'élément de pressage (19) peut être commandée ; et
l'élément de commande (60) est configuré pour empêcher l'exécution de l'opération sous la condition de moulage conçue par l'utilisateur suite à la détermination, dans le mode de confirmation, que la pression d'entraînement de l'élément de pressage (19) ne peut pas être commandée.

9. Machine de moulage par injection (10) selon l'une quelconque des revendications 1 à 8, dans laquelle
l'élément de commande (60) est configuré pour inciter une partie de sortie (64) à sortir un résultat de détermination obtenu dans le mode de confirmation.
